# EUROPEAN PATENT SPECIFICATION

(11) **EP 4 064 241 B1**
(45) Date of publication and mention of the grant of the patent: **15.10.2025**
(21) Application number: 22163612.9
(22) Date of filing: 22.03.2022
(51) Int. Cl.: G08G 1/0962, G08G 1/0965, B60R 1/26, G06V 20/58

(54) **VEHICLE EMERGENCY LIGHT DETECTING CAMERA SYSTEM**
KAMERASYSTEM ZUR ERKENNUNG VON FAHRZEUGNOTLICHTERN
SYSTÈME DE CAMÉRA DE DÉTECTION DES FEUX DE DÉTRESSE DE VÉHICULE

(30) Priority: 24.03.2021 US 202163165241 P
(43) Date of publication of application: 28.09.2022
(73) Proprietor: Stoneridge Electronics, AB, 16903 Solna (SE)
(72) Inventor: GRANN, Robert, 18245 Enebyberg (SE)
(74) Representative: Marks & Clerk LLP

(56) References cited:
- CZ-U1- 32 700
- JP-A- 2010 067 165
- US-A1- 2018 072 222
- US-A1- 2018 233 047
- US-A1- 2020 110 949

## Description

### TECHNICAL FIELD

This disclosure relates to a camera monitoring system (CMS) for use in a commercial truck, for example, incorporating exterior cameras with sensors for detecting emergency vehicle lights.

### BACKGROUND

Non-emergency vehicles must yield the roadway to emergency vehicles, which typically involves pulling the non-emergency vehicle to the side of the road. This can be quite challenging for a commercial vehicle due to its large size.

Typically a truck driver relies on continuously looking in the sideview mirrors to identify approaching emergency vehicles. In many cases it is difficult for the driver to see emergency vehicles due to the presence of and length of the trailer. This is especially true in que situations where it might be hard or almost impossible to detect emergency vehicles coming from far behind.

TETRA radio has been used to detect emergency vehicles where TETRA is used. However there are situations where TETRA is not used or is not available.

US 2018/072222 A1 describes a vehicle having a first microphone positioned to receive sounds originating from outside of the vehicle, a first analog-to-digital converter configured to covert the sounds received by the first microphone to digital audio signals, a first key to be carried by a first driver of the vehicle, a memory having a first plurality of voice commands stored therein, and a hardware processor. The hardware processor is configured to detect proximity of the first key to the vehicle, enable a voice recognition, in response to detecting the proximity of the first key to the vehicle, process the digital audio signals received by the first microphone, after enabling the voice recognition, to detect a first voice command of the first plurality of voice commands from the first driver, and altering a first setting of the vehicle, in response to detecting the first voice command from the first driver.

### SUMMARY

In one exemplary embodiment, there is provided a camera system for a first vehicle according to the appended claims.

In a further embodiment of any of the above, the legally prescribed views include Class II and Class IV views, and the target vehicle is outside the legally prescribed views when recognized.

In a further embodiment of any of the above, the first and second displays may be arranged respectively at left and right side A-pillars within the vehicle cabin.

In a further embodiment of any of the above, the vehicle location detector may be a navigation system.

In a further embodiment of any of the above, the warning device may include at least one of a visual alert and/or an audio alert.

In a further embodiment of any of the above, the visual alert may be provided on at least one of the first and second displays.

In a further embodiment of any of the above, the alert may communicate an estimated time of arrival and/or distance of the target vehicle relative to the first vehicle.

In a further embodiment of any of the above, the warning device may be provided by an audio source. The controller may be configured to signal the audio source to provide an audible alert within the vehicle cabin the location information of the target vehicle relative to the first vehicle.

In a further embodiment of any of the above, the lighting characteristic may include light color, light intensity, light pattern, and combinations thereof.

In a further embodiment of any of the above, the controller may be configured to classify the lighting characteristic as a common lighting characteristic or an emergency vehicle lighting characteristic based upon the emergency vehicle lighting characteristics organized by location in the database.

In another exemplary embodiment, a method of alerting a host vehicle driver of an approaching emergency vehicle includes, the method is configured to be used with a camera mirror system that has first and second exterior cameras that are configured to capture images outside of a host vehicle that corresponds to legally prescribed views, and first and second displays within a vehicle cabin are configured to depict the captured images respectively from the first and second exterior cameras, the method includes the steps of determining a location of the host vehicle, identifying a lighting characteristic of one or more vehicles using at least one of the first and second exterior cameras, comparing the lighting characteristic to a database of emergency vehicle lighting characteristics for the location of the host vehicle, recognizing a target vehicle in response to the comparing step, detecting location information of the target vehicle relative to the host vehicle in response to the recognizing step, and alerting the host vehicle driver of a location of the target vehicle relative to the host vehicle.

In a further embodiment of any of the above, the legally prescribed views include Class II and Class IV views, and the target vehicle is outside the legally prescribed views when recognized.

In a further embodiment of any of the above, the first and second displays may be arranged respectively at left and right side A-pillars within the vehicle cabin.

In a further embodiment of any of the above, the determining step may be performed by identifying a GPS coordinate for the host vehicle using a navigation system.

In a further embodiment of any of the above, the alerting step may be performed by providing at least one of a visual alert and/or an audio alert.

In a further embodiment of any of the above, the visual alert may be provided on at least one of the first and second displays.

In a further embodiment of any of the above, the alert may communicate an estimated time of arrival and/or distance of the target vehicle relative to the first vehicle.

In a further embodiment of any of the above, the alerting step may be performed by providing an audible alert with an audio source.

In a further embodiment of any of the above, the lighting characteristic may include light color, light intensity, light pattern, and combinations thereof.

In a further embodiment of any of the above, the comparing step may be performed by classifying the lighting characteristic as a common lighting characteristic or an emergency vehicle lighting characteristic based upon the emergency vehicle lighting characteristics organized by location in the database.

### BRIEF DESCRIPTION OF THE DRAWINGS

The disclosure can be further understood by reference to the following detailed description when considered in connection with the accompanying drawings wherein:
Figure 1A is a schematic front view of a commercial truck with a camera monitoring system (CMS) used to provide at least Class II and Class IV views.
Figure 1B is a schematic top elevational view of a commercial truck with a CMS shown in Figure 1A providing Class II, Class IV, Class V and Class VI views.
Figure 2 schematically illustrates components of an example host vehicle monitoring system for the vehicle in Figure 1A.
Figure 3 is a flowchart of an example method of alerting a host vehicle driver of an approaching target vehicle.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

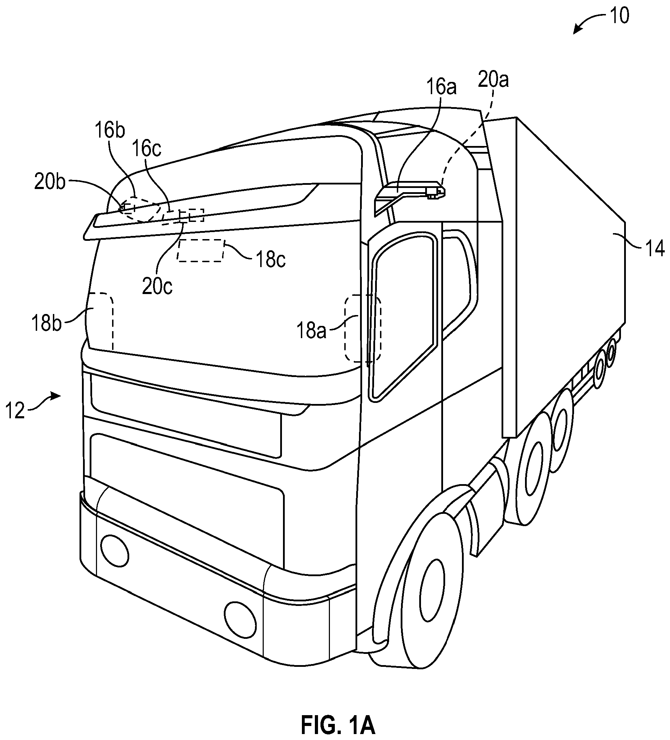

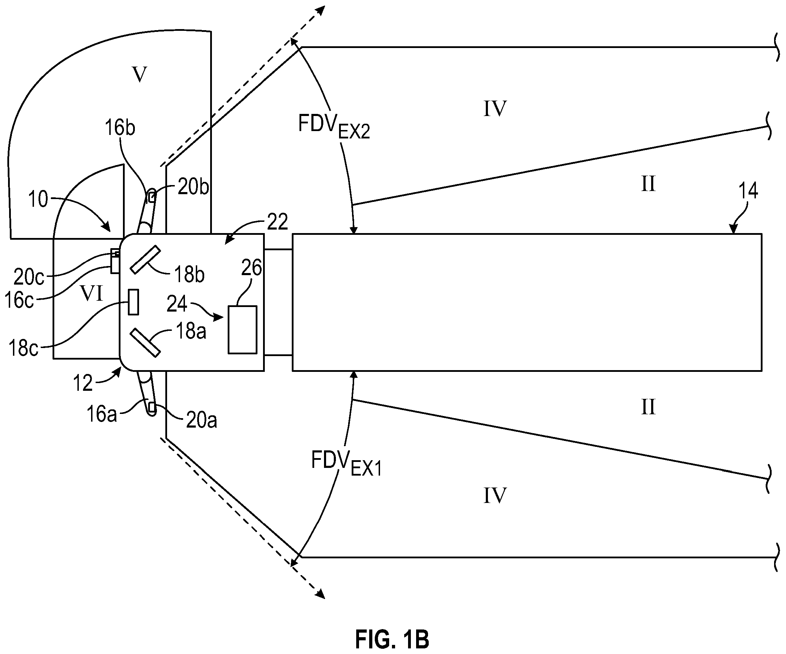

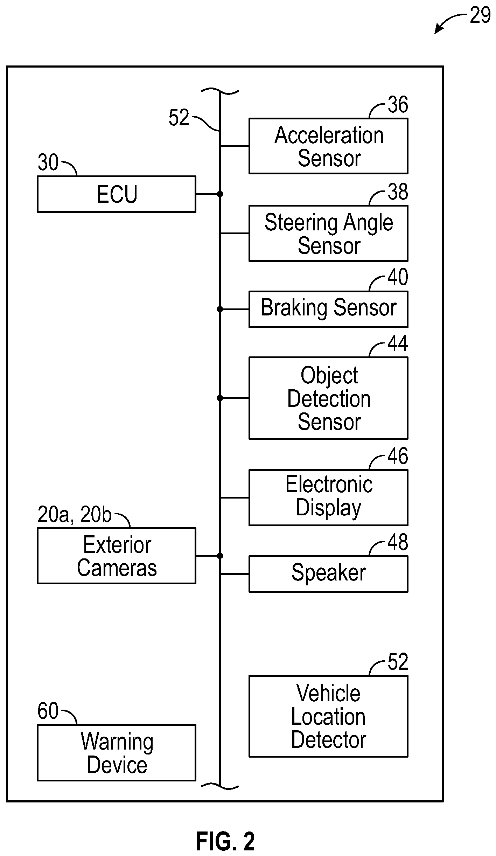

A schematic view of a commercial vehicle 10 is illustrated in Figures 1A and 1B. The vehicle 10 includes a vehicle cab or tractor 12 for pulling a trailer 14. Although a commercial truck is contemplated in this disclosure, the invention may also be applied other types of vehicles. The vehicle 10 incorporates a camera monitoring system (CMS) 15 (Fig. 2) that has driver and passenger side camera arms 16a, 16b mounted to the outside of the vehicle cab 12. If desired, the camera arms 16a, 16b may include conventional mirrors integrated with them as well, although the CMS 15 can be used to entirely replace mirrors.

Each of the camera arms 16a, 16b includes a base that is secured to, for example, the cab 12. A pivoting arm is supported by the base and may articulate relative thereto. At least one rearward facing camera 20a, 20b is arranged respectively within camera arms. The exterior cameras 20a, 20b respectively provide an exterior field of view FOV_{EX1}, FOV_{EX2} that each include at least one of the Class II and Class IV views (Fig. 1B), which are legal prescribed views in the commercial trucking industry. Multiple cameras also may be used in each camera arm 16a, 16b to provide these views, if desired. Each arm may also provide a housing that encloses electronics that are configured to provide various features of the CMS 15.

First and second video displays 18a, 18b are arranged on each of the driver and passenger sides within the vehicle cab 12 on or near the left and right A-pillars to display Class II and Class IV views on its respective side of the vehicle 10, which provide rear facing side views along the vehicle 10 that are captured by the exterior cameras 20a, 20b.

If video of Class V and Class VI views are also desired, a camera housing 16c and camera 20c may be arranged at or near the front of the vehicle 10 to provide those views (Fig. 1B). A third display 18c arranged within the cab 12 near the top center of the windshield can be used to display the Class V and Class VI views, which are toward the front of the vehicle 10, to the driver.

The displays 18a, 18b, 18c face a driver region 24 within the cabin 22 where an operator is seated on a driver seat 26. It may be desirable to incorporate a vehicle detection system (VDS) 29 into the CMS 15 to provide an alert to a vehicle operator of an approaching emergency vehicle(s) before the driver may otherwise be able to identify an emergency vehicle due to driver distraction or vantage point. That is, the emergency vehicle may be outside the legally prescribed views displayed on the displays 18a, 18b, 18c, but the emergency vehicle may still fall within the image capture units of one or more of the exterior cameras 20a, 20b. Accordingly, the VDS 29 may grant the vehicle operator an early warning to clear the road for the approaching emergency vehicle(s), or target vehicle(s). One example VDS 29 is illustrated in Figure 2.

As shown in Figure 2, the VDS 29 includes a vehicle location detector (VLD) 58 and a warning device 60. The VLD 58 is configured to determine a location of the vehicle 10, or host vehicle. In one example, the VLD 58 is a navigation system (e.g., GPS, GNNS, etc.) which is operable to provide reliable information for the purpose of determining the location of the vehicle 10 in relation to a map defining a region and/or country, for example. The warning device 60 is configured to provide a visual alert (e.g., on one of the displays 18a, 18b, 18c or driver information display (DIS) 46) and/or an audio alert (e.g., via an audio source such as a speaker 48).

Sensors 36-44 are used with the VDS 29 to gather addition information in connection with providing an alert of one or more approaching emergency vehicle, for example, by determining the location of the emergency vehicle relative to the vehicle 10. A controller or ECU 30 is in communication with the displays 18a-18c, the external cameras 20a, 20b, the VLD 58 and the warning device 60, and is configured to identify a lighting characteristic of one or more vehicles using the external cameras 20a, 20b. The lighting characteristic includes light color, light intensity, light pattern, and combinations thereof. The controller 30 can recognize a target vehicle by comparing the identified lighting characteristic to a database, which may be organized by region and/or country, for example. The database includes lighting characteristics (e.g., light color, light intensity, etc.) of emergency vehicles for the location of the vehicle 10. That is, emergency vehicles of a particular country and/or region may have distinctive colors and/or patterns. By referencing the vehicle location against a database, the VDS 29 can recognize an emergency vehicle.

In addition to comparing the lighting characteristic, the controller 30 may classify the lighting characteristic as one of a common characteristic or an emergency characteristic. Classification as an emergency characteristic is recognized as a target vehicle. Accordingly, it follows that classification as a common characteristic (e.g., flashing lights by a vehicle signaling a desire to pass) is not recognized as a target vehicle. For example, if the VLD 52 determines that the vehicle 10 is in a particular region and identifies a lighting characteristic for each of a second vehicle and third vehicle, the controller 30 will compare each respective second and third vehicle lighting characteristic to the database of emergency vehicle lighting characteristics for that particular region. The controller 30 then classifies the second vehicle lighting characteristic as an emergency characteristic, thus recognizing the second vehicle as a target vehicle. Similarly, the controller 30 classifies the third vehicle characteristic as a common characteristic, and thus ignores the third vehicle. The controller 30 may compare emergency vehicle lighting characteristics for a respective state, country, and/or region where the vehicle 10 is located. It will be appreciated that the database includes emergency vehicle lighting characteristics for law enforcement, firefighters, medical, and other rescue personnel vehicles.

The controller 30 is also configured to detect location information of the target vehicle relative to the vehicle 10 and signal the warning device 60 to communicate an alert of the target vehicle. The warning device 60 may communicate the alert visually using the displays 18a-18c, the electronic display 46, and/or audibly using the speaker 48. The alert includes an estimated time of arrival and/or estimated distance of the target vehicle relative to the vehicle 10. The estimated time and/or estimated distance may be communicated by displaying distance numbers, changing colors, flashing symbols at different rates, changing audible alert frequency and/or noise amplitude, for example.

The controller 30 is operably connected to the components 20a, 20b, 36-48, 52 and 60 through a vehicle data bus 52, which may be a controller area network ("CAN") bus or LIN bus, for example. The controller 30 is configured to perform an alert in the event that a target (or emergency) vehicle has been recognized. The controller 30 can be one controller or multiple controllers, if desired.

In one example the controller 30 is configured to continuously determine location information of the target vehicle. When the warning device 60 communicates the alert, the controller 30 initiates a new cycle to determine current location information of the target vehicle relative to the vehicle 10. Thus, the controller 30 can account for target vehicle feedback and therefore provide real-time target vehicle location information. As an example, target vehicle feedback can include change of speed.

It should be noted that the controller 30 may include one or more discrete units. Moreover, a portion of the controller 30 may be provided in the vehicle 10, while another portion of the controller 30 may be located elsewhere. In terms of hardware architecture, such a computing device can include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The controller 30 may be a hardware device for executing software, particularly software stored in memory. The controller 30 can be a custom made or commercially available processor, a central processing unit (CPU), an auxiliary processor among several processors associated with the controller, a semiconductor-based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. The memory can also have a distributed architecture, where various components are situated remotely from one another, but can be accessed by the processor. The database may be stored in memory.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The disclosed input and output devices that may be coupled to system I/O interface(s) may include input devices, for example but not limited to, a keyboard, mouse, scanner, microphone, camera, mobile device, proximity device, etc. Further, the output devices, for example but not limited to, a printer, display, etc. Finally, the input and output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the controller 30 is in operation, the processor can be configured to execute software stored within the memory, to communicate data to and from the memory, and to generally control operations of the computing device pursuant to the software. Software in memory, in whole or in part, is read by the processor, perhaps buffered within the processor, and then executed.

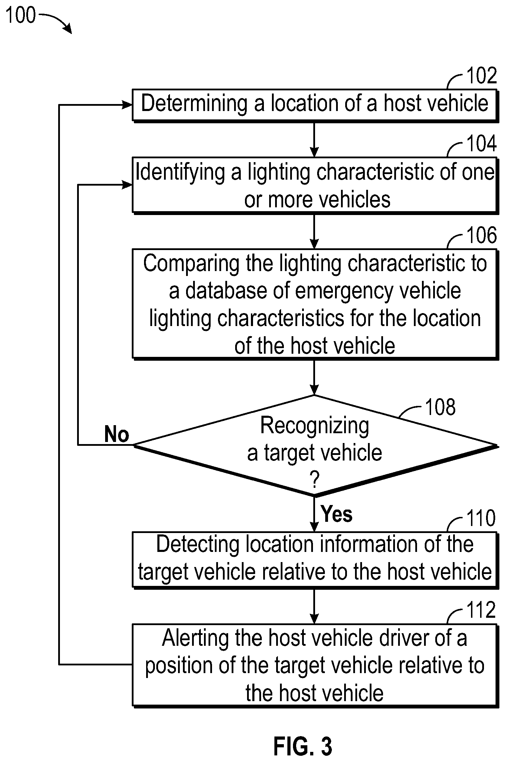

Figure 3 is a flowchart of one specific example method 100 of alerting a host vehicle driver of an emergency vehicle. The controller 30 determines a location of a host vehicle (step 102). The controller 30 identifies a lighting characteristic of one or more vehicle using at least one of the two external cameras (step 104), and compares the lighting characteristic to a database having all available emergency vehicle lighting characteristic for the location of the host vehicle (step 106). If no emergency vehicle lighting characteristic is recognized (a "no" to step 108), the controller 30 continues to identify and compare lighting characteristics. If an emergency vehicle lighting characteristic is encountered (a "yes" at step 108), the controller 30 recognizes that as a target vehicle. The controller 30 detects the location of the target vehicle with respect to the host vehicle (step 110). The controller 30 then signals the warning device 60 to alert the host vehicle driver of the location of the target vehicle with respect to the host vehicle (step 112). Steps 102-112 recur in order to provide real-time target vehicle location information.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although an example embodiment has been disclosed, a worker of ordinary skill in this art would recognize that certain modifications would come within the scope of the claims.

## Claims

1. A camera monitoring system (15) for a first vehicle (10), comprising:
first and second exterior cameras (20a, 20b) configured to capture images outside of the first vehicle (10) corresponding to legally prescribed views;
first and second displays (18a, 18b) arranged within a vehicle cabin (22) of the first vehicle (10) and configured to depict the captured images respectively from the first and second exterior cameras (20a, 20b);
a vehicle location detector (52) configured to determine a location of the first vehicle (10) and a particular region in which the first vehicle (10) is located;
a plurality of sensors (36, 38, 40, 44) configured to determine a location of a second vehicle relative to the first vehicle (10) and a location of a third vehicle relative to the first vehicle (10);
a warning device (60) configured to provide at least one alert within the vehicle cabin (22); and
a controller (30) in communication with the first and second displays (18a, 18b), the first and second exterior cameras (20a, 20b), the vehicle location detector (52), and the warning device (60), the controller (30) configured to:
identify (104) a lighting characteristic for each of the second vehicle and the third vehicle using at least one of the first and second exterior cameras (20a, 20b),
compare (106) each respective second and third vehicle lighting characteristic to a database of emergency vehicle lighting characteristics for the particular region in which the first vehicle is located,
classify the second vehicle lighting characteristic as an emergency characteristic and classify the third vehicle characteristic as a common characteristic, thus recognizing (108) the second vehicle as a target vehicle;
detect (110) location information of the target vehicle relative to the first vehicle using the plurality of sensors (36, 38, 40, 44), and
activate (112) the warning device to provide the alert based upon the location information.

2. The system (15) of claim 1, wherein the legally prescribed views include Class II and Class IV views, and the target vehicle is outside the legally prescribed views when recognized.

3. The system (15) of claim 2, wherein the first and second displays (18a, 18b) are arranged respectively at left and right side A-pillars within the vehicle cabin.

4. The system (15) of any preceding claim, wherein the vehicle location detector (52) is a navigation system.

5. The system (15) of any preceding claim, wherein the warning device (60) includes at least one of a visual alert and/or an audio alert.

6. The system (15) of claim 5, wherein the visual alert is provided on at least one of the first and second displays (18a, 18b).

7. The system (15) of claim 5 or 6, wherein the alert communicates an estimated time of arrival and/or distance of the target vehicle relative to the first vehicle (10).

8. The system (15) of any one of claims 5 to 7, wherein the warning device (60) is provided by an audio source (48), the controller (30) is configured to signal the audio source (48) to provide an audible alert within the vehicle cabin (22) of the location information of the target vehicle relative to the first vehicle (10).

9. The system (15) of any preceding claim, wherein the lighting characteristic includes light color, light intensity, light pattern, and combinations thereof.

## Patentansprüche

1. Kameraüberwachungssystem (15) für ein erstes Fahrzeug (10), umfassend:
eine erste und eine zweite Außenkamera (20a, 20b), die dazu konfiguriert sind, Bilder außerhalb des ersten Fahrzeugs (10) aufzunehmen, die den gesetzlich vorgeschriebenen Ansichten entsprechen;
eine erste und eine zweite Anzeige (18a, 18b), die innerhalb einer Fahrzeugkabine (22) des ersten Fahrzeugs (10) angeordnet und dazu konfiguriert sind, die von der ersten beziehungsweise der zweiten Außenkamera (20a, 20b) aufgenommenen Bilder anzuzeigen;
einen Fahrzeugstandortdetektor (52), der dazu konfiguriert ist, einen Standort des ersten Fahrzeugs und eine jeweilige Region zu bestimmen, in der sich das erste Fahrzeug (10) befindet;
eine Vielzahl von Sensoren (36, 38, 40, 44), die dazu konfiguriert sind, einen Standort eines zweiten Fahrzeugs relativ zum ersten Fahrzeug (10) und einen Standort eines dritten Fahrzeugs relativ zum ersten Fahrzeug (10) zu bestimmen;
eine Warnvorrichtung (60), die dazu konfiguriert ist, mindestens einen Alarm in der Fahrzeugkabine (22) bereitzustellen; und
eine Steuereinheit (30), die mit der ersten und der zweiten Anzeige (18a, 18b), der ersten und der zweiten Außenkamera (20a, 20b), dem Fahrzeugstandortdetektor (52) und der Warnvorrichtung (60) in Kommunikation steht, wobei die Steuereinheit (30) für Folgendes konfiguriert ist:
Identifizieren (104) einer Beleuchtungscharakteristik für sowohl das zweite Fahrzeug als auch das dritte Fahrzeug unter Verwendung von mindestens einer der ersten und der zweiten Außenkamera (20a, 20b),
Vergleichen (106) der entsprechenden Beleuchtungscharakteristik des zweiten und des dritten Fahrzeugs mit einer Datenbank von Beleuchtungscharakteristiken von Einsatzfahrzeugen für die jeweilige Region, in der sich das erste Fahrzeug befindet,
Klassifizieren der Beleuchtungscharakteristik des zweiten Fahrzeugs als eine Einsatzcharakteristik und Klassifizieren der Charakteristik des dritten Fahrzeugs als eine allgemeine Charakteristik, somit Erkennen (108) des zweiten Fahrzeugs als ein Zielfahrzeug;
Erfassen (110) von Standortinformationen des Zielfahrzeugs relativ zum ersten Fahrzeug unter Verwendung der Vielzahl von Sensoren (36, 38, 40, 44), und
Aktivieren (112) der Warnvorrichtung, um den Alarm basierend auf den Standortinformationen bereitzustellen.

2. System (15) nach Anspruch 1, wobei die gesetzlich vorgeschriebenen Ansichten Klasse-II- und Klasse-IV-Ansichten beinhalten und sich das Zielfahrzeug außerhalb der gesetzlich vorgeschriebenen Ansichten befindet, wenn es erkannt wird.

3. System (15) nach Anspruch 2, wobei die erste und die zweite Anzeige (18a, 18b) an der linken beziehungsweise rechten A-Säule innerhalb der Fahrzeugkabine angeordnet sind.

4. System (15) nach einem vorstehenden Anspruch, wobei der Fahrzeugstandortdetektor (52) ein Navigationssystem ist.

5. System (15) nach einem vorstehenden Anspruch, wobei die Warnvorrichtung (60) mindestens einen von einem visuellen Alarm und/oder einem akustischen Alarm beinhaltet.

6. System (15) nach Anspruch 5, wobei der visuelle Alarm auf mindestens einer der ersten und der zweiten Anzeige (18a, 18b) bereitgestellt wird.

7. System (15) nach Anspruch 5 oder 6, wobei der Alarm eine voraussichtliche Ankunftszeit und/oder einen Abstand des Zielfahrzeugs relativ zum ersten Fahrzeug (10) kommuniziert.

8. System (15) nach einem der Ansprüche 5 bis 7, wobei die Warnvorrichtung (60) von einer Audioquelle (48) bereitgestellt wird, die Steuereinheit (30) dazu konfiguriert ist, der Audioquelle (48) zu signalisieren, innerhalb der Fahrzeugkabine (22) einen akustischen Alarm der Standortinformationen des Zielfahrzeugs relativ zum ersten Fahrzeug (10) bereitzustellen.

9. System (15) nach einem vorstehenden Anspruch, wobei die Beleuchtungscharakteristik Lichtfarbe, Lichtintensität, Lichtmuster und Kombinationen davon beinhaltet.

## Revendications

1. Système de surveillance à caméra (15) pour un premier véhicule (10), comprenant :
des première et seconde caméras extérieures (20a, 20b) configurées pour capturer des images à l'extérieur du premier véhicule (10) correspondant à des vues légalement prescrites ;
des premier et second affichages (18a, 18b) agencés à l'intérieur d'un habitacle de véhicule (22) du premier véhicule (10) et configurés pour représenter les images capturées respectivement à partir des première et seconde caméras extérieures (20a, 20b) ;
un détecteur d'emplacement de véhicule (52) configuré pour déterminer un emplacement du premier véhicule et une région particulière dans laquelle le premier véhicule (10) est situé ;
une pluralité de capteurs (36, 38, 40, 44) configurés pour déterminer un emplacement d'un deuxième véhicule par rapport au premier véhicule (10) et un emplacement d'un troisième véhicule par rapport au premier véhicule (10) ;
un dispositif d'avertissement (60) configuré pour fournir au moins une alerte à l'intérieur de l'habitacle de véhicule (22) ; et
un dispositif de commande (30) en communication avec les premier et second affichages (18a, 18b), les première et seconde caméras extérieures (20a, 20b), le détecteur d'emplacement de véhicule (52) et le dispositif d'avertissement (60), le dispositif de commande (30) étant configuré pour :
identifier (104) une caractéristique d'éclairage pour chacun du deuxième véhicule et du troisième véhicule à l'aide d'au moins une des première et seconde caméras extérieures (20a, 20b),
comparer (106) chaque deuxième et troisième caractéristique d'éclairage de véhicule à une base de données de caractéristiques d'éclairage de véhicule d'urgence pour la région particulière dans laquelle le premier véhicule est situé,
classer la deuxième caractéristique d'éclairage de véhicule comme une caractéristique d'urgence et classer la troisième caractéristique de véhicule comme une caractéristique commune, ce qui permet de reconnaître (108) le deuxième véhicule comme un véhicule cible ;
détecter (110) des informations d'emplacement du véhicule cible par rapport au premier véhicule à l'aide de la pluralité de capteurs (36, 38, 40, 44), et
activer (112) le dispositif d'avertissement pour fournir l'alerte sur la base des informations d'emplacement.

2. Système (15) selon la revendication 1, dans lequel les vues légalement prescrites incluent des vues de classe II et de classe IV, et le véhicule cible est hors des vues légalement prescrites lorsqu'il est reconnu.

3. Système (15) selon la revendication 2, dans lequel les premier et seconds affichages (18a, 18b) sont agencés respectivement sur des montants A gauche et droit à l'intérieur de l'habitacle de véhicule.

4. Système (15) selon une quelconque revendication précédente, dans lequel le détecteur d'emplacement de véhicule (52) est un système de navigation.

5. Système (15) selon une quelconque revendication précédente, dans lequel le dispositif d'avertissement (60) inclut au moins une d'une alerte visuelle et/ou d'une alerte audio.

6. Système (15) selon la revendication 5, dans lequel l'alerte visuelle est fournie sur au moins un des premier et second affichages (18a, 18b).

7. Système (15) selon la revendication 5 ou 6, dans lequel l'alerte communique une heure d'arrivée estimée et/ou une distance du véhicule cible par rapport au premier véhicule (10).

8. Système (15) selon l'une quelconque des revendications 5 à 7, dans lequel le dispositif d'avertissement (60) est fourni par une source audio (48), le dispositif de commande (30) est configuré pour signaler à la source audio (48) de fournir une alerte audible à l'intérieur de l'habitacle de véhicule (22) des informations d'emplacement du véhicule cible par rapport au premier véhicule (10).

9. Système (15) selon une quelconque revendication précédente, dans lequel la caractéristique d'éclairage inclut une couleur de lumière, une intensité lumineuse, un motif lumineux et des combinaisons de ceux-ci.
